# EUROPEAN PATENT APPLICATION

(11) **EP 3 136 272 A1**
(43) Date of publication of application: **01.03.2017**
(21) Application number: 16182924.7
(22) Date of filing: 05.08.2016
(51) Int. Cl.: G06F 21/10

(54) **CLIENT APPARATUS AND LICENSE MANAGEMENT METHOD**

(30) Priority: 31.08.2015 JP 2015171260
(71) Applicant: Canon Kabushiki Kaisha, Tokyo 146-8501 (JP)
(72) Inventor: MINAGAWA, Tomonori, Tokyo, Tokyo 146-8501 (JP)
(74) Representative: TBK

(57) **Abstract**

The present invention is configured to acquire a license having a valid time period and periodically renew the license. The present invention stops the regular renewal of the license if an environment executing an application is inactivated, and restarts the regular renewal of the license if determining that the environment is activated.

## Description

### BACKGROUND OF THE INVENTION

### Field of the Invention

The present invention relates to license management of an application based on a floating license.

### Description of the Related Art

There is a floating license method as one of methods for granting a license to use a paid application to a client. This is a method that manages a plurality of licenses purchased by a user (i.e., the number of concurrently usable licenses) with use of a license server (hereinbelow, simply referred to as a server), and causes this server to lend out the licenses to the clients, thereby allowing these clients to temporarily use the application. In other words, this method allows the clients to activate the application concurrently within a range of the number of purchased licenses. The main body of the application itself can be installed in any number of apparatuses. On each of the clients, when the application is activated, this application connects to the server and receives an issuance of the license, thereby allowing the client to use the application for which the license is issued. The server performs control so as to permit the activation of the application within the range of the number of licenses purchased by the user, and, once the number of lent licenses reaches an upper limit determined by the number of purchased licenses, prohibit another client from activating the application any more. At this time, if any of the clients ends the use of the application and returns the license to the server, another client becomes able to activate the application by acquiring this returned license. Using the application therein at different times with use of such a floating license makes this application usable on a plurality of clients more than the number of purchased licenses.

Since the floating license has a limitation on the number of clients that can concurrently use the application as described above, it is desirable that the client keeps holding the floating license during its intended work without a break, and returns the floating license to the server quickly after an end of the work. Therefore, common usage of the floating license is to acquire the license when the application is activated and to return the license when the application is closed (when a process is ended).

Japanese Patent Application Laid-Open No. 2003-108252 discusses such usage that a license is acquired when an application is activated and is returned when the application is closed, and expires if communication has failed a predetermined number of times.

Some of operating systems (OSs) on client apparatuses have a multi-account function of using a service while switching a plurality of accounts on a single client. Under a multi-account environment, an application activated on each of the accounts can operate independently without being affected by other account environments.

On the client OS, an account environment currently in use becomes an active state and the other account environments become an inactive state. The active state refers to such a state that a desktop screen is displayed and the user can freely operate the application running thereon. On the other hand, the inactive state refers to such a state that the account environment is hidden behind the active environment and the user cannot operate the application running thereon.

Now, suppose that an application activated under an account environment A acquires a floating license and is in operation. When the account environment is switched to another account environment B, the account environment A under which this application is in operation is inactivated, yet the application in the middle of being executed under the account environment A continues running itself and therefore ends up keeping holding the license. Therefore, despite a complete lack of any operation performed by the user under the account environment A, the license is not returned to the server, and therefore this case results in depriving another user of an opportunity to use the application and reducing an operation rate of the license (the number of applications being actually operated by users). This is not desirable in terms of efficient utilization of the floating license. One possible solution thereto is to forcibly terminate the application in the middle of being executed under the account environment A and return the license at the moment at which the account is switched.

However, in some cases, after the account is switched for mere temporary use, the account may be switched again to return to the original account environment immediately. If the application is closed and the license is returned once when the account is switched even in such a case, this raises the necessity of reacquiring the license when switching the account again and using the application under the original account environment again. On the other hand, the floating license has the upper limit on the number of users permitted to use the application concurrently as described above, so that immediate reacquisition of the license is not necessarily guaranteed. More specifically, there is such a risk that, even with the account switched only temporarily, once the license is returned, this returned license might be acquired by another user, making it impossible to resume the work immediately when the account environment is returned to the original account environment.

As described above, if the license is kept held for a long time period by the application in operation under the inactivated account environment, this leads to a problem of the reduction in the operation rate of the license. Nevertheless, returning the license immediately at the moment at which the account is switched may reduce convenience for the user if this switching is intended as temporary switching of the account.

### SUMMARY OF THE INVENTION

According to a first aspect of the present invention, there is provided a client apparatus as specified in claims 1 to 9. According to a second aspect of the present invention, there is provided a computer-readable storage medium as specified in clams 10 to 18. According to a third aspect of the present invention, there is provided a license management method performed by a client as specified in clam 19.

Further features of the present invention will become apparent from the following description of exemplary embodiments with reference to the attached drawings.

### BRIEF DESCRIPTION OF THE DRAWINGS

Fig. 1 illustrates a system configuration.
Fig. 2 illustrates a hardware configuration.
Fig. 3 illustrates a software configuration.
Fig. 4 illustrates time-sequence processing of a floating license.
Fig. 5 is a flowchart illustrating processing regarding a renewal of the license.
Fig. 6 is a time-sequence diagram regarding license processing according to a first exemplary embodiment.
Fig. 7 is a time-sequence diagram regarding license processing according to a second exemplary embodiment.
Fig. 8 is a time-sequence diagram regarding license processing according to a third exemplary embodiment.
Fig. 9 is a flowchart according to the third exemplary embodiment.
Fig. 10 is a flowchart in a case where a license valid for an arbitrary specified valid time period is acquired when an account is switched according to the third exemplary embodiment.

### DESCRIPTION OF THE EMBODIMENTS

### [System Configuration]

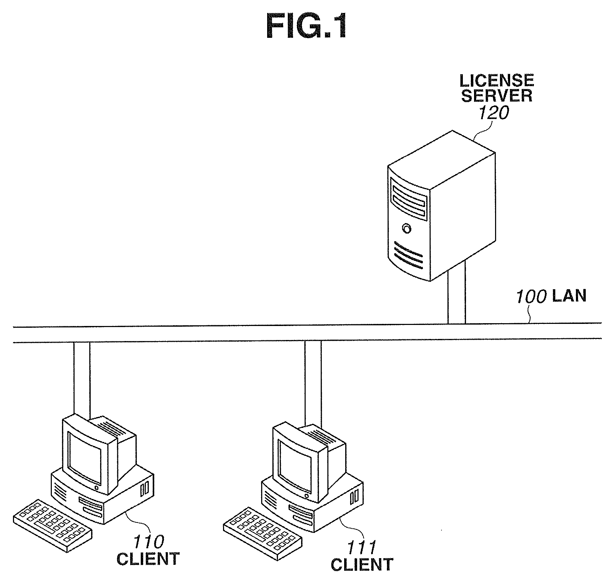

Fig. 1 illustrates a configuration of a floating license management system according to a first exemplary embodiment of the present invention. The present exemplary embodiment is a system in which a license server and a plurality of clients can communicate with each other via a network. A local area network (LAN) 100 is a LAN that allows a client 110 (and a client 111) and a license server 120 to communicate with each other, but may be a wide area network (WAN).

An application 300 is installed in the client 110 (and the client 111). The client 110 (and the client 111) can attain a release of a use restriction imposed on a part or a whole of a function of this application 300 and thereby use the application 300, by acquiring a license (a floating license) to use this application 300 from the license server 120.

The license server 120 is a license server that issues the floating license to the application 300 in operation inside the client 110 (and the client 111), and is assumed to hold a predetermined number (one or more) of license(s) purchased in advance.

The floating license (hereinbelow, simply referred to as the license) is a license that the license server 120 temporarily lends to the client 110 requesting the license. Each of the clients 110 (and 111) can use this application 300 by installing the application 300 therein in advance and receiving the license from the license server 120 when using it. After completion of the use, returning the above-described license to the license server 120 allows another user to also use the application 300 with use of this returned license. This mechanism makes this application 300 usable by users more than the number of licenses.

The license issued by the license server 120 may be data in a file format, or may be data like binary data or a use license flag. The license issued by the license server 120 may be embodied by employing any method as long as this method can realize secure handling of the use license between the license server 120 and the client 110. Hereinbelow, the acquisition of the use license (the license) by the client 110 from the license server 120 will be referred to as license acquisition, and the return of the use license by the client 110 to the license server 120 will be referred to as a license return, regardless of a medium and a method.

### [Hardware Configuration]

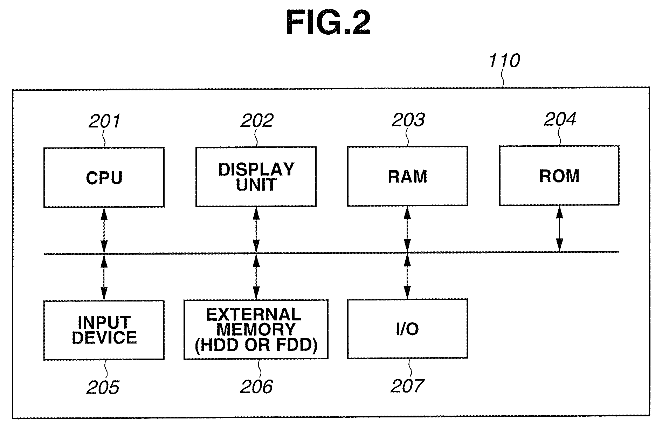

Fig. 2 illustrates a hardware configuration (a hardware configuration of a computer) of the client 110 (and the client 111) illustrated in Fig. 1. In Fig. 2, the hardware configuration includes an input device 205, which receives an input of a user operation, such as a keyboard and a pointing device. Further, the hardware configuration includes a display unit (a display) 202, which presents a visual feedback indicating output information to the user. Further, the hardware configuration includes a random access memory (RAM) 203, a read only memory (ROM) 204, and an external memory 206 such as a hard disk drive (HDD) and a floppy disk drive (FDD), which are storage devices storing various kinds of programs and execution information according to the present exemplary embodiment. Further, the hardware configuration includes an interface device Input/Output (I/O) 207, which communicates with an external apparatus, and a central processing unit (CPU) 201, which executes a program. The client 110 and the license server 120 communicate with each other via the interface device I/O 207. Further, the license server 120 may also have a similar hardware configuration.

Processing that will be described in the present exemplary embodiment is realized by the CPU 201 loading a program stored in a storage medium such as the ROM 204 or the external memory 206 into the RAM 203, and executing the loaded program. In other words, the computer functions as each of processing units of the client 110 (or the license server 120) that will be described below, by executing the computer program stored in each of these apparatuses.

### [Software Configuration]

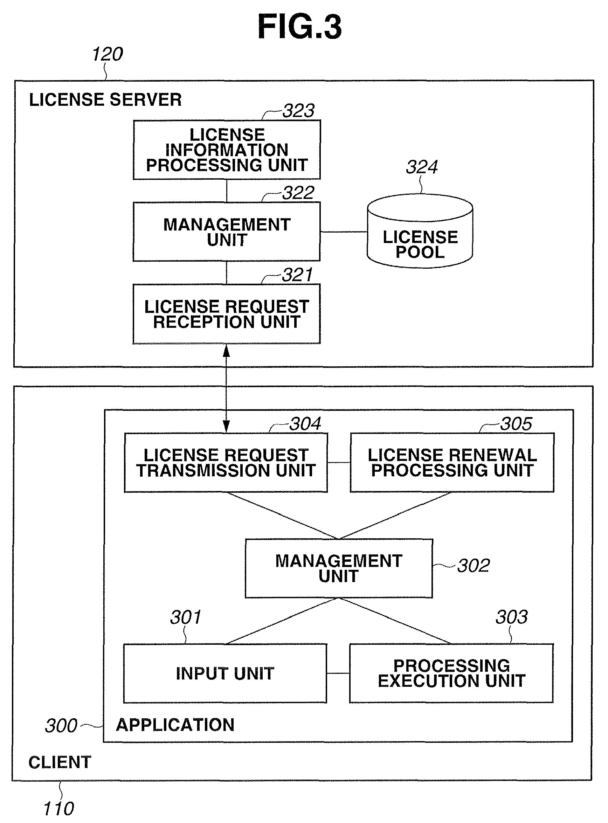

Fig. 3 illustrates one example of a software configuration realized by the client 110 and the license server 120 executing the respective computer programs.

First, the application 300 executed on the client 110 will be described. The application 300 functions as an input unit 301, a management unit 302, a processing execution unit 303, a license request transmission unit 304, and a license renewal processing unit 305.

The input unit 301 receives an operation input from the user, and transfers the input request to the management unit 302. If the input entered on the input unit 301 is a request to activate the application 300, the management unit 302 determines that the license becomes necessary, and instructs the license request transmission unit 304 to acquire the license. The license request transmission unit 304 issues a request to acquire the license to the license server 120 via the network 100. At this time, the license request transmission unit 304 transmits a client identifier that allows the client 110 to be uniquely identified together with the request. A media access control (MAC) address, a serial number of a hardware component, a calculation value generated from a combination of them, or the like can be used as the client identifier. As the license server 120 will be described in detail below, license acquisition processing performed by the license request transmission unit 304 succeeds as long as there is an available license left. In the present example, assume that a license with a valid time period T2 (for example, 10 minutes) set thereto is acquired at this time.

The license request transmission unit 304 notifies the management unit 302 of a success or a failure in the license acquisition processing, and the valid time period T2 if the result is a success. If the license acquisition is successful, the management unit 302 instructs the processing execution unit 303 to activate the application 300. The processing execution unit 303 activates the application 300. After the processing execution unit 303 has succeeded in the activation of the application 300, the management unit 302 also instructs the processing execution unit 303 in a similar manner, when receiving a request to carry out the function or a request for processing on an operation screen (editing a document, a print instruction, or the like) from the input unit 301. On the other hand, if the license request transmission unit 304 has failed in the license acquisition, the management unit 302 performs control so as not to carry out the request to activate the application 300 that has been input on the input unit 301. In this case, the management unit 302 may notify the user operating the client 110 that the floating license has not been able to be acquired (i.e., the number of already issued licenses has reached an upper limit of the number of concurrently usable licenses) via a message or the like.

If having succeeded in the acquisition of the license valid for the valid time period T2, a procedure for renewing the license is continuously performed so as to prevent the valid time period of the license from expiring after that. Now, details thereof will be described.

The management unit 302 instructs the license renewal processing unit 305 to periodically renew the license. The license renewal processing unit 305 instructs the license request transmission unit 304 to renew the license at each time interval T1 (e.g., every three minutes). Upon receiving the instruction to renew the license, the license request transmission unit 304 connects to the license server 120 via the network 100, and issues a request to renew the license. Normally, the renewal on the license server 120 succeeds if the request is issued from the client currently licensed to use the application 300. If the renewal at this time has succeeded, the client 110 acquires a new license further valid from when this renewal is carried out until after the valid time period T2 (e.g., ten minutes) has elapsed. The license is overwritten with the new license, and the validity of the license is continuously maintained as long as the license request transmission unit 304 is successful in the license acquisition. This processing will be referred to as the renewal of the license.

On the other hand, if the license request transmission unit 304 has failed in the connection to the license server 120 or has failed in the license acquisition from the license server 120, the license is not renewed. For example, when the client 110 is disconnected from the network 100 or when the license server 120 goes down, these failures occur. If having failed in the license renewal, the license request transmission unit 304 attempts to renew the license again after a predetermined time interval has further elapsed (e.g., after three minutes). If the license request transmission unit 304 continues failing in the license acquisition, as a result of which the license is determined to have been unable to be renewed within the valid time period T2 of the license, the acquired license loses its validity. At this time, the management unit 302 performs some expiration processing. For example, the management unit 302 can carry out some actions such as imposing a restriction on the function of the application 300 and prompting the user to close the application 300, displaying a message indicating the expiration to the user, and/or instructing the license renewal processing unit 305 to end the regular renewal. Even if the license request transmission unit 304 has failed in the license acquisition several times, the validity of the license is renewed if the license can be reacquired before the license expires.

If the request input via the input unit 301 is a request to close the application 300, the management unit 302 determines that the license becomes unnecessary, and instructs the license request transmission unit 304 to return the license. The license request transmission unit 304 returns the license to the license server 120.

Next, the license server 120 will be described. The license server 120 is assumed to store the (one or more) license(s) purchased in advance in a license pool 324. In the present system, the license server 120 issues (lends) the license in response to the request from the client 110 within the upper limit that is equal to the number of licenses already stored in the license pool 324. A license information processing unit 323 manages at least a license count (the number of remaining licenses) and a licensee of the use license, and the total number of licenses is set as an initial value of the above-described license count.

A license request reception unit 321 receives the request to acquire the license or the request to return the license that is issued from the application 300, and notifies a management unit 322 of this request.

If the request is the request to acquire the license, the management unit 322 transfers the client identifier received together with this request to the license information processing unit 323, and inquires of the license information processing unit 323 about whether the license has been already issued to the client corresponding to the client identifier. If the license information processing unit 323 determines that the license has been already issued to this client, this means that the request is the request to renew the license, whereby the management unit 322 returns a success status and the license renewed with the new valid time period T2 to the license request reception unit 321. Further, the license information processing unit 323 manages a new expiration date after the license is renewed in association with the client identifier.

If the license has not been issued to the corresponding client when the license information processing unit 323 confirms the license identifier, this request is determined to be a new request. At this time, the license information processing unit 323 further confirms whether there is an issuable license left based on the license count. The license count indicates the number of remaining issuable licenses, and if the license count indicates one or a larger number, this means that there is still an issuable license left. In this case, the management unit 322 instructs the license information processing unit 323 to substrate one from the license count, and returns the success status and the license prepared with the valid time period T2 to the license request reception unit 321. Further, the license information processing unit 323 records and manages the client identifier of the client that has issued this request and the expiration date of this issued license in association with each other.

As described above, the license server 120 reissues the license with the expiration date thereof renewed to the client that has been already licensed to use the application 300 (without reducing the license count), while issuing the license to the client that has not yet been licensed to use the application 300 after subtracting one from the license count. The former and the latter are procedures in response to the request to renew the license from the application 300 and the request to acquire the new license when the application 300 is activated, respectively.

If the license count indicates zero, this means that there is no issuable license left anymore. In this case, the management unit 322 returns a failure status to the license request reception unit 321.

In this manner, when receiving the request to acquire the license or the request to renew the license, the license request reception unit 321 returns the success or failure status, and the license if the result is a success to the client 110.

If the license request reception unit 321 receives the request to return the license from the license request transmission unit 304, the management unit 322 receives this returned license and the client identifier of the client that has issued this request. Further, the management unit 322 instructs the license information processing unit 323 to increment the license count by one, and delete the client identifier of the client that has issued this request, which has been managed as the licensee of the use license.

There is also a license that stops being requested to be renewed from the currently licensed client 110 and reaches the expiration date thereof without being renewed. If recognizing the license that has reached the expiration date thereof, the management unit 322 determines that the issued license has expired, and instructs the license information processing unit 323 to perform similar processing to the processing performed when the license is returned. More specifically, when the license has reached the expiration date thereof, the license information processing unit 323 performs the processing of incrementing the license count by one and deleting the client identifier of the client licensed by this expired license. At this time, the license cannot be renewed on the application 300 and the valid time period T2 has elapsed, which lead to expiration of this license and execution of the license expiration processing.

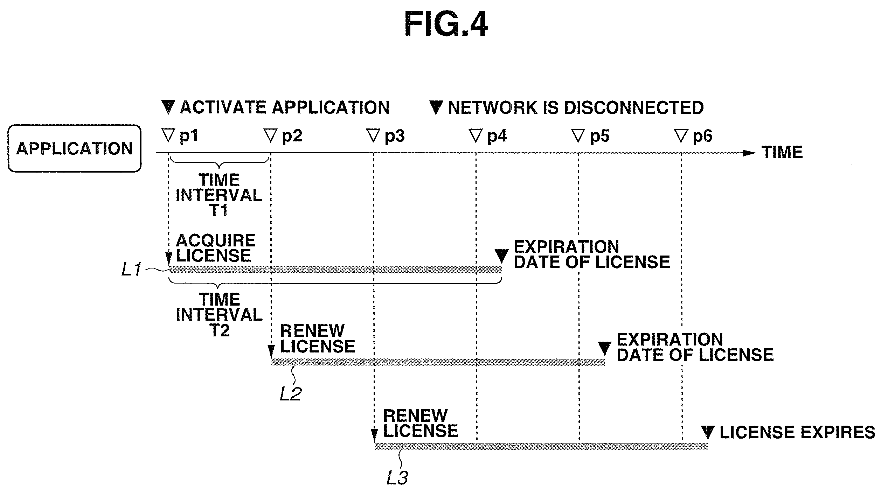

Fig. 4 illustrates one example of the acquisition, the renewal, and the expiration of the floating license.

Assume that the application 300 connects to the license server 120 to request the license, and acquires a license L1 valid for the valid time period T2 (e.g., ten minutes) upon receiving the activation request (time p1). After the time interval T1 (e.g., three minutes) has elapsed (time p2), the application 300 requests the license again to renew the license L1. If the application 300 can connect to the license server 120, the processing for renewing the license is performed on the license server 120, and the application 300 acquires a license L2 valid for the valid time period T2 from the license server 120. If the license L2 is acquired, the above-described license L1 is overwritten with the license L2. After the time interval T1 has further elapsed (time p3), the application 300 requests the license again to renew the license L2. If being able to connect to the license server 120, the application 300 can acquire a license L3 valid for the valid time period T2 from the license server 120, whereby the license L2 is overwritten with the license L3 and the license is renewed in a similar manner. After that, the expiration date continues being extended as long as the renewal is successful.

On the other hand, supposing that the client 110 is disconnected from the network 100 after the license is renewed at time p3, the request to renew the license fails at time p4, time p5, and time p6. Then, once the expiration date of the license L3 has come, the license L3 expires, whereby the application 300 performs the license expiration processing (e.g., imposing the functional restriction). At this time, the license server 120 also determines that the expiration date of the license L3 has come, and recovers the license issued to this client into the license pool 324. The expiration date may be determined when a specific time period has elapsed or when a specific time has come, or when the communication has failed a specific number of times.

### [Processing regarding License Renewal when Account Environment is Switched]

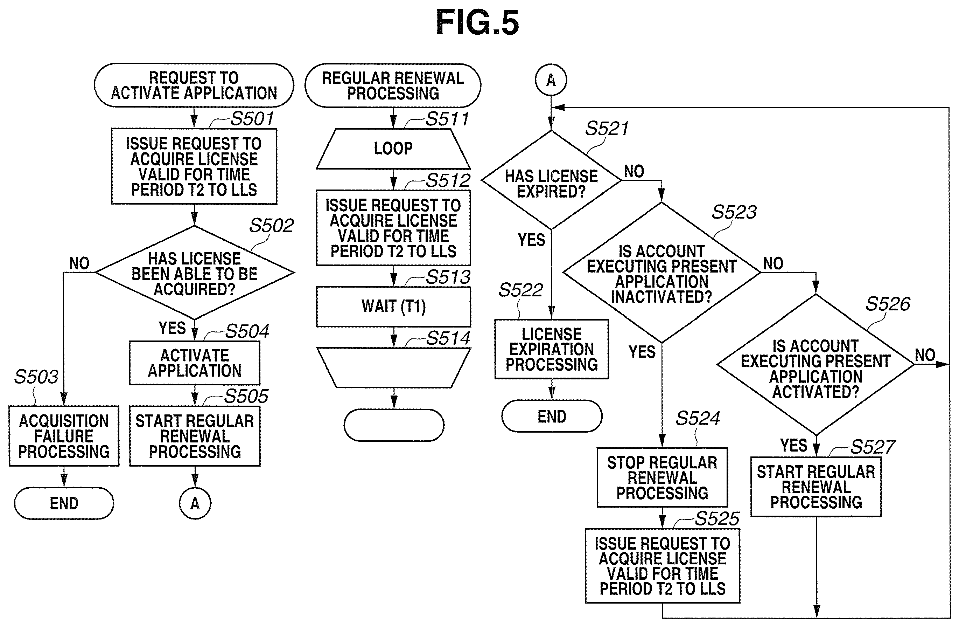

Fig. 5 illustrates a processing flow regarding the renewal of the license that is performed by the application 300 on the client 110 having a function of switching an account environment.

When the request to activate the application 300 is received by the input unit 301, in step S501, the license request transmission unit 304 connects to the license server 120, and issues the request to acquire the license (the valid time period T2). In step S502, the management unit 302 determines whether the license request transmission unit 304 has succeeded or failed in the license acquisition. If the license request transmission unit 304 has failed in the license acquisition (NO in step S502), the processing proceeds to step S503. If the license request transmission unit 304 has succeeded in the license acquisition (YES in step S502), the processing proceeds to step S504. In step S503, the management unit 302 performs the processing to be performed when the license request transmission unit 304 has failed in the license acquisition, such as performing control so as not to activate the application 300 and notifying the user of the message. Then, the processing is ended.

If the license request transmission unit 304 has succeeded in the acquisition (YES in step S502), the processing proceeds to step S504. In step S504, the management unit 302 instructs the processing execution unit 303 to activate the application 300. After that, in step S505, the management unit 302 instructs the license renewal processing unit 305 to start the processing for periodically renewing the license (license regular renewal processing).

Now, a flow of the license regular renewal processing performed by the license renewal processing unit 305 will be described. Upon being instructed to start the regular renewal processing from the management unit 302, the license renewal processing unit 305 performs processes of steps S511 to S514. The license renewal processing unit 305 repeats the processes of steps S512 (issue the request to acquire the license) and S513 (wait) within the loop between steps S511 and S514 until being instructed to stop the regular renewal processing from the management unit 302. At loop symbols of steps S511 and S514, the license renewal processing unit 305 determines whether the license renewal processing unit 305 is instructed to stop the regular renewal processing from the management unit 302, and exits the loop processing to end the regular renewal processing if determining that the license renewal processing unit 305 is instructed to stop the regular renewal processing. In step S512, the license request transmission unit 304 connects to the license server 120 and issues the request to acquire the license valid for the valid time period T2 (i.e., the request to renew the license). If the license is acquired, the license is overwritten with this acquired license, which leads to the extension of the expiration date of the license. In step S513, the license renewal processing unit 305 waits for time period corresponding to the time interval T1. Repeatedly performing the processes of steps S512 and S513 leads to the issuance of the request to acquire the license valid for the valid time period T2 (the request to renew the license) every time the time interval T1 has elapsed. The regular renewal processing from steps S511 to S514 is started according to the start instruction from the management unit 302, and stopped according to the stop instruction from the management unit 302.

In step S521, the management unit 302 determines whether the expiration date of the license has expired. If the expiration date has expired (YES in step S521), the processing proceeds to step S522. If the expiration date has not expired yet (NO in step S521), the processing proceeds to step S523. At this time, while the license regular renewal processing is successful in the renewal of the license (steps S511 to S514), the expiration date of the license continues being extended, whereby this case leads to the advancement to step S523.

In step S522, the management unit 302 performs the processing to be performed when the license has expired (the license expiration processing). At this time, the management unit 302 instructs the license renewal processing unit 305 to end the regular renewal, and imposes the restriction on the function of the application 300. At this time, the management unit 302 may perform processing such as displaying the message indicating the expiration to the user so as to prompt the user to close the application 300.

Next, processing performed when the account environment is switched on the OS of the client 110 will be described. Whether the account is switched, and information about each of activated or inactivated accounts can be acquired from, for example, event information from the OS.

In step S523, the management unit 302 determines (detects) whether the account environment is switched from the account executing the present application 300 to an account of another user. If the account environment is switched (YES in step S523), the processing proceeds to step S524. If the account environment is not switched (NO in step S523), the processing proceeds to step S526. In step S524, the management unit 302 instructs the license renewal processing unit 305 to stop the license regular renewal processing. A process of step S525 will be described below in a second exemplary embodiment, and is skipped in the first exemplary embodiment.

In step S526, the management unit 302 determines (detects) whether the account environment is switched from an account of another user to the account executing the present application 300 on the OS of the client 110. If the account environment is switched (YES in step S526), the processing proceeds to step S527. If the account environment is not switched (NO in step S526), the processing proceeds to step S521. In step S527, the management unit 302 restarts the license regular renewal processing (the processes of steps S511 to S514), and activates the application 300 that is being executed under the switched account environment. This case also leads to the activation of the desktop screen under the switched account environment at this time.

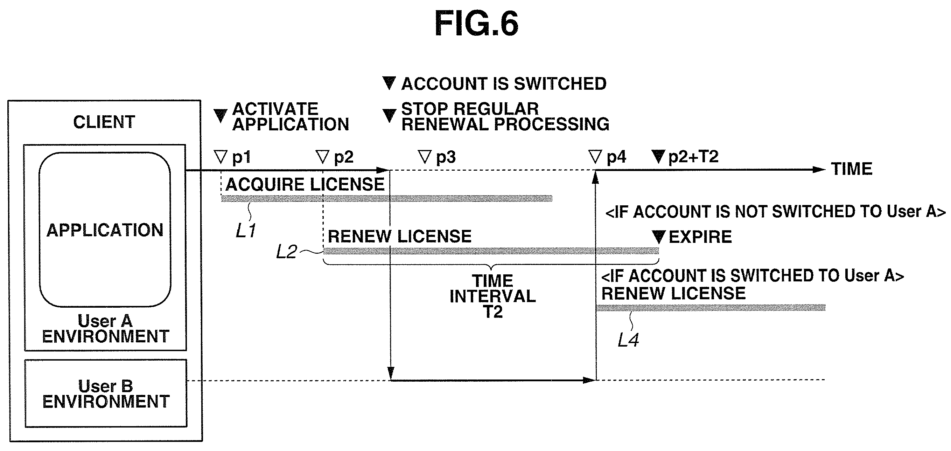

Next, a flow of the license processing when the account environment is switched will be described with reference to a time-sequence diagram illustrated in Fig. 6.

First, upon being instructed to activate the application 300 on an account of User A (time p1), in step S501, the application 300 requests the license. If the application 300 has succeeded in the acquisition of the license L1 valid for the valid time period T2 (YES in step S502), in step S504, the application 300 is activated. At this time, in step S505, the application 300 starts the license regular renewal processing. Then, in step S512, the application 300 performs the license regular renewal processing to acquire the license L2, and updates the license L1 with the license L2 at time p2.

After that, if the account is switched to an account of User B (YES in step S523) before time p3 that is a regular renewal time, in step S524, the application 300 stops the license regular renewal processing with respect to the application 300 that is being executed on the account of User A.

After that, if the account is switched again to the account of User A (YES in step S526) at time p4 before the expiration date (p2 + T2) of the license L2 has come, in step S527, the application 300 restarts the license regular renewal. Then, in step S512, the application 300 acquires a license L4 to renew the license.

On the other hand, if the expiration date (p2 + T2) of the license L2 has come (YES in step S521) without the account switched to User A after being switched to User B, in step S522, the application 300 performs the license expiration processing.

As described above, the license can be prevented from being kept held for a long time period by the application 300 that is being executed under the inactivated account environment on the OS of the client 110 having the multi-account function. Further, even when the account environment is switched, the license is kept held for a certain time period instead of being immediately returned, which allows the user to quickly resume the work in a case where the user soon returns the account environment to the original account environment to resume the work using this application 300, thereby improving the convenience.

In the first exemplary embodiment, a grace period until the license of User A expires somewhat varies depending on the timing at which the account is switched. More specifically, if the account is switched immediately after the regular renewal (e.g., immediately after time p2 illustrated in Fig. 6), the time period T2 (e.g., ten minutes) until the expiration, almost fully remains. However, if the account is switched immediately before the next regular renewal time (e.g., immediately before time p3 illustrated in Fig. 6), the remaining time period until the expiration, is only the time period T2 - the time interval T1 (e.g., ten minutes - three minutes = seven minutes). A variation in the grace period until the license expires increases depending on the setting of time periods T1 and T2. In other words, a variation undesirably occurs in the grace period during which the user can return the account environment to the original account environment without letting the license of the application 300 expire.

Therefore, in a second exemplary embodiment, the application 300 is configured to acquire the license once at a time point at which the regular renewal is stopped when the account is switched, thereby maintaining consistency in the grace period during which the user can return the account environment to the original account environment without letting the license of the application 300 expire, even when there is a difference in the timing at which the account is switched.

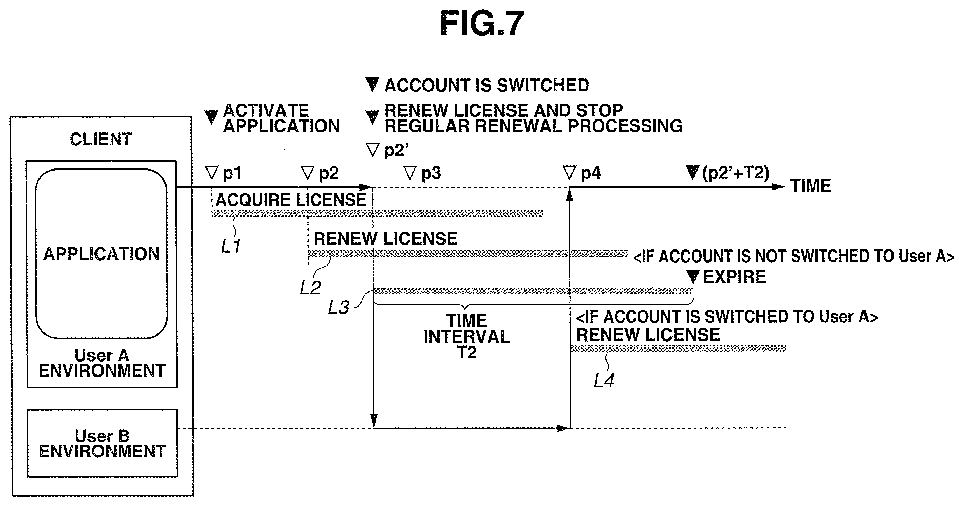

Now, differences from the first exemplary embodiment will be described with reference to the flowchart illustrated in Fig. 5 and a time-sequence diagram illustrated in Fig. 7. Processes that are not especially specified below are similar processes to the first exemplary embodiment.

Upon being instructed to activate the application 300 on the account of User A at time p1, in step S501, the application 300 issues the request to acquire the license. If the application 300 has succeeded in the acquisition of the license L1 (YES in step S502), the processing proceeds to step S504. In step S504, the application 300 is activated. In step S512, the application 300 performs the license regular renewal processing to acquire the license L2, and updates the license L1 with the license L2 at time p2. After that, if the account is switched to User B (YES in step S523) at time p2' before time p3 that is the regular renewal time, the processing proceeds to step S524. In step S524, the application 300 stops the regular renewal processing with respect to the application 300 that is being executed on the account of User A. In the second exemplary embodiment, in step S525, the application 300 further issues the request to acquire the license valid for the time period T2 at this time point. In Fig. 7, in step S525, the application 300 issues the request to acquire the license L3 at time p2'. If the application 300 has succeeded in the acquisition of the license L3 at this time, the time period T2 remains for the user as the remaining time period (the grace period) from when the account is switched to User B until the license L3 expires.

In this way, the user can be guaranteed that the license remains valid during the predetermined time period T2 regardless of at which timing the account is switched while the license regular renewal processing is in progress. Therefore, according to the second exemplary embodiment, no variation occurs in the grace period during which the user can return the account environment to the original account environment without letting the license of the application 300 expire.

In the second exemplary embodiment, the time period T2 (e.g., ten minutes) is granted as the grace period during which the user can return the account environment to the original account environment without letting the license expire. On the other hand, in the first place, the time period T2 is set as the grace period until the client 110 is recovered from the disconnection from the network 100 or a state shifted into a sleep mode, and therefore may be too short as the grace period for the switching of the account. For example, supposing that User A offers the use of the client PC to User B only while User A is away from the desk of User A for thirty minutes with the intention to continue the work using the corresponding application 300 immediately when User A returns after that, the valid time period of ten minutes is insufficient in this case.

Therefore, in a third exemplary embodiment, a grace period T3 (a longer time period than T2, such as thirty minutes) for the switching of the account is granted. In the present exemplary, the valid time period T3 of the license is a value specific to the system, and cannot be changed when the request for the license is issued.

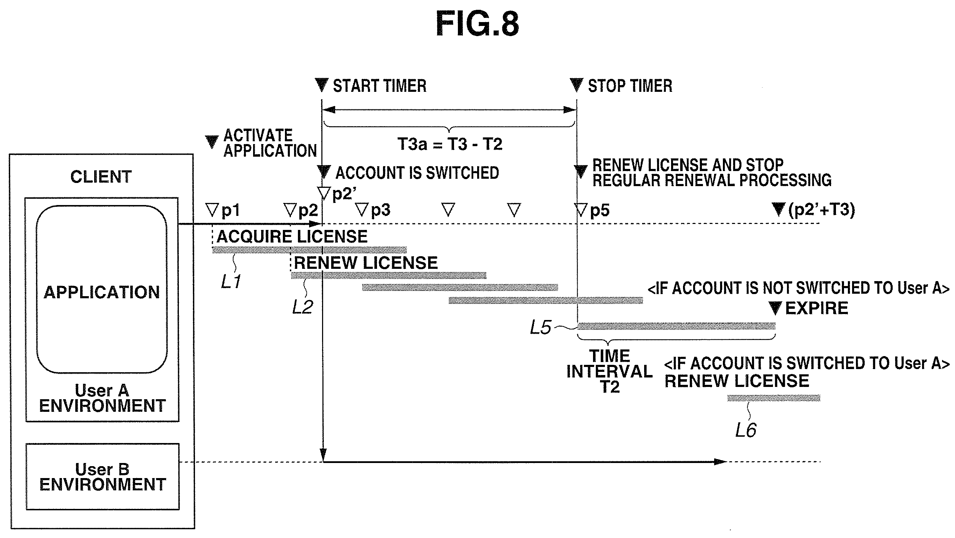

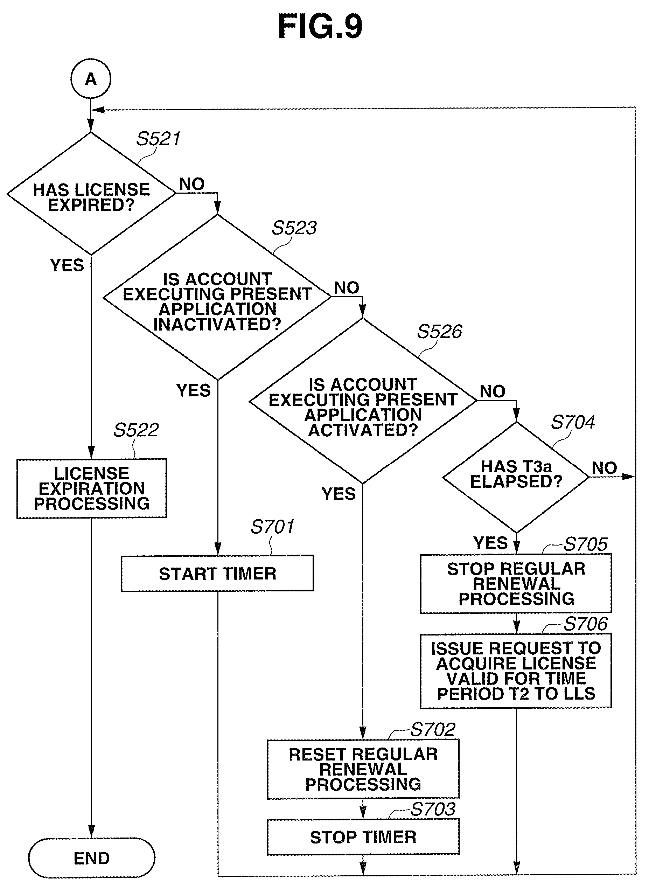

Now, differences from the second exemplary embodiment will be described with reference to a time-sequence diagram illustrated in Fig. 8 and the flowcharts illustrated in Figs. 5 and 9. In Fig. 9, step S521 and the subsequent steps are replaced compared with the flowchart in Fig. 5. Processes that are not described below are similar processes to the first exemplary embodiment.

Upon being instructed to activate the application 300 on the account of User A at time p1, in step S501, the application 300 issues the request to acquire the license. If the application 300 has succeeded in the acquisition of the license L1 (YES in step S502), the processing proceeds to step S504. In step S504, the application 300 is activated. In step S512, the application 300 performs the license regular renewal processing to acquire the license L2, and updates the license L1 with the license L2 at time p2. After that, if the account is switched to User B (YES in step S523) at time p2' before time p3 that is the regular renewal time, the processing proceeds to step S701. In step S701 illustrated in Fig. 9, the application 300 starts a timer. A timer time period T3a of the timer is set to T3 - T2. The time period T2 with the timer time period T3a added thereto is equal to the time period T3.

In step S526, the application 300 determines whether the account is switched from the account of the User B to the account of User A. If the account is switched (YES in step S526), the processing proceeds to step S702. If the account is not switched (NO in step S526), the processing proceeds to step S704. In step S702, the application 300 resets the license regular renewal processing. Then, in a subsequent step, step S703, the application 300 stops the timer.

In step S704, the application 300 determines whether the timer time period T3a has elapsed. If this timer time period T3a has elapsed (YES in step S704), the processing proceeds to step S705. If this timer time period T3a has not elapsed yet (NO in step S704), the processing proceeds to step S521. In step S705, the application 300 stops the license regular renewal processing. In step S706, the application 300 issues the request to acquire the license, and acquires a license L5 valid for the valid time period T2. In other words, when the account is switched, the processes of steps S704 to S706 lead to a renewal of the license and also a stop of the regular renewal of the license after a predetermined time period has elapsed (the timer time period T3a has elapsed).

In Fig. 8, if the account is switched to User B at time p2' (YES in step S523), the processing proceeds to step S701. In step S701, the application 300 causes the timer to start counting the timer time period T3a. In steps S511 to S514, the application 300 continues the license regular renewal processing and keeps holding the license until the timer time period T3a has elapsed.

After that, when the application 300 determines that the timer time period T3a has elapsed (time p5) without the account switched to User A (YES in step S704), the processing proceeds to step S705. In step S705, the application 300 stops the license regular renewal processing. Then, in step S706, the application 300 issues the request to acquire the license. If the application 300 has succeeded in the acquisition of the license L5 at this time, the time period T2 remains for the user as the time period from time p5 until the expiration of the license, which means the time period T3 remains for the user as the time period from when the account is switched to User B (time p2') until the expiration of the license of the application 300 that is being executed on the account of User A.

Further, if the account is switched from User B to User A while the timer is in operation (YES in step S526), the application 300 resets the license regular renewal processing in step S702, and stops the timer to count the timer time period T3a in step S703. If, in step S702, the application 300 requests reset of the regular renewal processing, there is no problem even if this request is issued while the license regular renewal processing is in progress. If the account is switched from User B to User A (YES in step S526) after the license regular renewal processing is stopped in step S705, the processing proceeds to step S702. In step S702, the application 300 restarts the license regular renewal processing. In step S703, if the application 300 requests the processing for stopping the timer to count the timer time period T3a, there is no problem even if this request is issued after the timer time period T3a has elapsed. In either case, if the account is switched from User B to User A before the time (p'2 + T3) has come, the license of the application 300 that is being executed on the account of User A is updated with a license L6, which allows User A to continue the processing without letting the license expire.

As described above, the present exemplary embodiment can set the time period T3, which is longer than the fixed time period T2 of the system that is set as the grace period for the disconnection from the network 100 and the sleep mode, as the grace period for the switching of the account, thereby improving the convenience.

In a case where the license system is configured in such a manner that the valid time period of the license is not fixed to T2 but is changeable when the request to acquire the license is issued, the setting of the valid time period T3 may also be realized by the following processing flow.

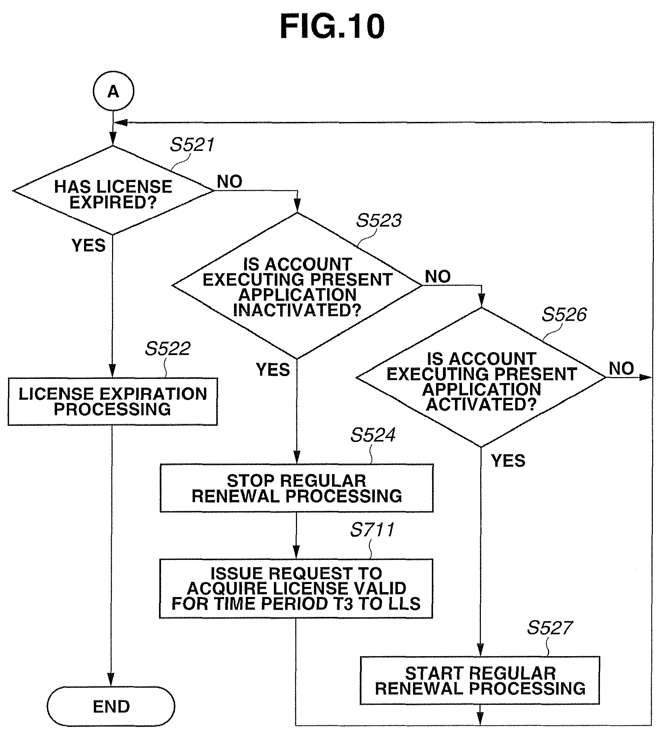

A similar effect can also be achieved by modifying the processing according to the second exemplary embodiment so as to request the license valid for the valid time period T3 instead of requesting the license valid for the valid time period T2 when the account is switched at time p2'. More specifically, the request for the license valid for the valid time period T2 that is issued in step S525 illustrated in Fig. 5 is modified so as to be issued like step S711 illustrated in Fig. 10.

This modification allows the time period T3 to be guaranteed as the time period from when the account is switched to User B until the license expires even without use of the timer.

Further, the time period T3 may be arranged in such a manner that the setting thereof is changeable based on an instruction from the user. The changeable setting allows the client 110 to switch the grace period employed when the account is switched for each user, thereby further improving the convenience.

The present invention may be applied not only to the case when the account is switched but also to a case of a transition to and a return from a screensaver or a password protection screen.

In the first to third exemplary embodiments, the processing performed when the switching of the account triggers the inactivation of the specific user environment, is described. On the other hand, the transition to the screensaver or the password protection screen also causes the inactivation of the user environment and makes the application 300 inoperable by the user. Therefore, in a fourth exemplary embodiment, similar processing may be performed according to detection of the transition to and the return from the screensaver mode or the password protection screen mode instead of the detection of the switching of the account performed in the first to third exemplary embodiments.

More specifically, in step S523, the application 300 determines whether the account environment is inactivated due to the transition to the screensaver or the password protection screen. Further, in step S526, the application 300 determines whether the account environment is activated due to the return from the screensaver or the password protection screen. This processing can also realize the efficient management of the license at the time of the transition to the screensaver or the password protection screen in a similar manner to the license management at the time of the switching of the account.

The present invention may be applied to a state transition to the sleep state or a hibernation state.

When the system of the client 110 enters the sleep or hibernation state, the processing for automatically renewing the license is stopped after that. However, the grace period from when the system enters the sleep or hibernation state until the license expires varies depending on the timing when the license is acquired last time. This also causes a variation in the grace period in a similar manner to the second exemplary embodiment.

Therefore, in a fifth exemplary embodiment, the application 300 acquires the license once at a time point when the state transition to the sleep or hibernation state is detected. This processing can secure the grace period T2 (or T3) as a predetermined time period.

Further, the present invention is also applicable regardless of whether the license covers a scope on a client-by-client basis or a scope on a user-by-user basis. The license on the client-by-client basis is such a license that the presence of only a single license on this client allows the application to be activated from all user accounts. Further, the license on the user-by-user basis is such a license that the license should be acquired for each user, and when there is a plurality of user accounts on a single client, the license is necessary for each of them.

Further, the present invention is also applicable regardless of whether the automatic renewal processing runs as a user process or a system process. Generally, processing running as a part of an application is often the user process. However, processing desired to be used in common from different user accounts on the same client can also be launched as the system process (a service) by being separated from the application as an execution file. Even in this case, the present invention is applicable.

In a case where the license covers the scope on the client-by-client basis and the automatic renewal processing is launched as the system process, this is convenient because a plurality of users in the client 110 can share a single license between or among the users when using the same application 300 in this case. However, the following problem arises.

Suppose that User A executes the application 300 and acquires the license, and changes the account to User B in expectation of the grace period continuing for the time period T2 (or T3). User B can continuously use the license acquired by User A if immediately activating the same application 300. After that, if User B returns the license when closing the application 300 after using it for a short time period, this results in that, even if User A resumes the work before the expected grace period T2 (or T3) has elapsed when the account environment is returned to User A, the license has been already returned due to the operation performed by User B. This is inconvenient for User A.

Therefore, in a sixth exemplary embodiment, each application 300 confirms whether the license has been already acquired when being activated. If the license has been already acquired, the application 300 acquires the expiration date thereof in advance, and performs control so as not to return the license until the above-described expiration date when the application 300 is closed by the User B before the above-described expiration date.

This processing allows User A to hold the license during the expected grace period T2 or T3 when resuming the work even if User B closes the application 300, thereby improving the convenience.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The present invention is configured to acquire a license having a valid time period and periodically renew the license. The present invention stops the regular renewal of the license if an environment executing an application is inactivated, and restarts the regular renewal of the license if determining that the environment is activated.

## Claims

1. A client apparatus configured to acquire a license from a license server when activating an application, the client apparatus comprising:
an acquisition means configured to acquire a license having a valid time period from the license server;
a renewal means configured to periodically renew the acquired license;
a first determination means configured to determine whether an environment executing the application is inactivated;
a stop means configured to stop the regular renewal of the license by the renewal means if the first determination means determines that the environment is inactivated;
a second determination means configured to determine whether the environment executing the application is activated;
a restart means configured to restart the regular renewal of the license by the renewal means if the second determination means determines that the environment is activated; and
an expiration processing means configured to perform license expiration processing with respect to the application if the valid time period of the license expires.

2. The client apparatus according to claim 1,
wherein the client apparatus is a client having a function of switching an account environment,
wherein the first determination means determines that the environment executing the application is inactivated when an account environment executing the application is switched to another account environment, and
wherein the second determination means determines that the environment executing the application is activated when the other account environment is switched to the account environment executing the application.

3. The client apparatus according to claim 1, wherein the stop means renews the license and also stops the regular renewal of the license by the renewal means if the first determination means determines that the environment is inactivated.

4. The client apparatus according to claim 1, wherein the stop means renews the license and also stops the regular renewal of the license by the renewal means after a predetermined timer time period has elapsed if the first determination means determines that the environment is inactivated.

5. The client apparatus according to claim 1, wherein the stop means renews the license to acquire a license having a second valid time period and also stops the regular renewal of the license by the renewal means if the first determination means determines that the environment is inactivated.

6. The client apparatus according to claim 1,
wherein the first determination means determines that the environment executing the application is inactivated when the environment executing the application transitions to a screensaver or a password protection screen, and
wherein the second determination means determines that the environment executing the application is activated when the environment executing the application returns from the screensaver or the password protection screen.

7. The client apparatus according to claim 1, wherein the first determination means determines that the environment executing the application is inactivated when the environment executing the application transitions to a sleep or hibernation state.

8. The client apparatus according to claim 2,
wherein the license is a license acquired on a client by client basis, and
wherein the client apparatus further includes a control means configured to perform control so as not to return the license until the valid time period of the license expires when the client apparatus is instructed to close the application under the switched other account environment.

9. The client apparatus according to claim 1, further comprising a second control means configured to perform control so as not to activate the application if the acquisition means cannot acquire the license from the license server.

10. A non-transitory computer-readable storage medium storing a computer program that causes a computer to perform:
acquiring a license having a valid time period from a license server when activating an application;
periodically renewing the acquired license;
determining whether an environment executing the application is inactivated, as a first determination;
stopping the regular renewal of the license if it is determined in the first determination that the environment is inactivated;
determining whether the environment executing the application is activated, as a second determination;
restarting the regular renewal of the license if it is determined in the second determination that the environment is activated; and
performing license expiration processing with respect to the application if the valid time period of the license expires.

11. The non-transitory computer-readable storage medium according to claim 10,
wherein the first determination includes determining that the environment executing the application is inactivated when an account environment of the computer executing the application is switched to another account environment, and
wherein the second determination includes determining that the environment executing the application is activated when the other account environment is switched to the account environment executing the application.

12. The non-transitory computer-readable storage medium according to claim 10, wherein, in stopping the regular renewal of the license, the license is renewed and the regular renewal of the license is stopped if it is determined in the first determination that the environment is inactivated.

13. The non-transitory computer-readable storage medium according to claim 10, wherein, in stopping the regular renewal of the license, the license is renewed and the regular renewal of the license is stopped after a predetermined timer time period has elapsed if it is determined in the first determination that the environment is inactivated.

14. The non-transitory computer-readable storage medium according to claim 10, wherein, in stopping the regular renewal of the license, the license is renewed to acquire a license having a second valid time period and the regular renewal of the license is stopped if it is determined in the first determination that the environment is inactivated.

15. The non-transitory computer-readable storage medium according to claim 10,
wherein the first determination includes determining that the environment executing the application is inactivated when the environment executing the application transitions to a screensaver or a password protection screen, and
wherein the second determination includes determining that the environment executing the application is activated when the environment executing the application returns from the screensaver or the password protection screen.

16. The non-transitory computer-readable storage medium according to claim 10, wherein the first determination includes determining that the environment executing the application is inactivated when the environment executing the application transitions to a sleep or hibernation state.

17. The non-transitory computer-readable storage medium according to claim 11, wherein the license is a license acquired client by client basis, and
the computer program causes the computer to further perform:
performing control so as not to return the license until the valid time period of the license expires when the computer is instructed to close the application under the switched other account environment.

18. The non-transitory computer-readable storage medium according to claim 10, the computer program causes the computer to further perform:
performing control so as not to activate the application if the license cannot be acquired from the license server by the acquiring, as second control.

19. A license management method performed by a client apparatus, the method comprising:
acquiring a license having a valid time period from a license server;
periodically renewing the acquired license;
determining whether an environment executing an application is inactivated, as a first determination;
stopping the regular renewal of the license if it is determined in the first determination that the environment is inactivated;
determining whether the environment executing the application is activated, as a second determination;
restarting the regular renewal of the license if it is determined in the second determination that the environment is activated; and
performing license expiration processing with respect to the application if the valid time period of the license expires.
